# EUROPEAN PATENT APPLICATION

(11) **EP 2 341 479 A1**
(43) Date of publication of application: **06.07.2011**
(21) Application number: 10195964.1
(22) Date of filing: 20.12.2010
(51) Int. Cl.: G06Q 30/00

(54) **System and method for providing user control of the user's network usage data and personal profile information**

(30) Priority: 30.12.2009 US 655413
(71) Applicant: Navteq North America, LLC, Chicago, Illinois 60606 (US)
(72) Inventor: Lee, Wei-Yeh, New York, NY 10128 (US)
(74) Representative: Pelly, Jason Charles

(57) **Abstract**

Systems and methods provided for tracking a user's usage of resources on the Internet under the user's control, and for controlling the distribution of the user's usage data. A personal data endpoint is configured to operate on a computer that is connected to the Internet. The personal data endpoint includes a network data interface configured to receive data communicated to and from a user of at least one personal application. The at least one personal application is configured to send and receive data over the Internet. A usage data logger stores usage data from the received data, and stores the usage data in a usage data log. A usage data filter is configured to control communication of the usage data over the Internet and to inhibit communication of information identifying the user over the Internet.

## Description

### BACKGROUND

The Internet has become a complete marketplace. The Internet provides a resource for researching products and services, shopping for products or services, and conducting purchases. With respect to researching and shopping on-line, the Internet provides users with search engines and access to a substantial amount of information. The Internet also provides a medium for product and service providers to advertise their offerings to an ever-growing audience. Media content providers publish their media on the World Wide Web on the web sites that they sponsor. The media content providers also provide the space on their web sites, or more specifically on the web pages containing the media content, for advertisements.

The larger media content providers include search engines, such as Google or Yahoo!, and traditional media publishers, such as the New York Times, Wall Street Journal, and CNN, for example. Media content providers rely on advertising as one source of revenue. Since media content providers may be literally anyone that has a web site, a wide variety of enterprises and individuals are relying on advertising on the web as a source of revenue.

It is the larger media providers that have fueled the growth of advertisement on the Internet. The largest sites bought their own Ad servers and have their own operational advertising sales teams. Ad servers have evolved as a way of managing advertisement content, as well as, the mechanisms for generating revenue, and monitoring the success or failure of advertisement campaigns. As AdNetworks have arisen and provided a broader one-stop-shop for advertisers, Ad servers have fallen by the wayside in favor of AdNetworks, which are enterprises that provide access to ad servers and eliminate the need for Content Sites to manage their own advertising sales teams. AdNetworks also dramatically reduce the advertising investment required by small content providers like bloggers and smaller web sites. Doubleclick is one example of an AdNetwork that has made a business providing access to ad servers. Doubleclick and others like it may even offer on-line marketing resources such as strategies for on-line ad campaigns and ways to monitor an ad campaign's success. Some media content providers, such as Google, have developed their own ad servers and may offer their ad servers to other media providers.

A product or service provider that wants to advertise on-line may enter into an agreement with the media content provider. The media provider may provide an ad server or obtain access to a third-party ad server as the source of the advertisement content on its web pages. The ad content may be accessed each time the ad is to be posted on a web page. For example, when a computer user accesses a web site sponsored by the media content provider, the web page downloaded to the user may include embedded ad links that "point" to ad content on the ad servers. When the user's computer receives the embedded links, the links are used to request the ad content from the ad servers.

Media content providers and advertisers have long sought for ways of targeting advertisements to an audience contextually. A variety of tools have been developed to provide such contextual targeting. One example of such a tool is the "cookie." Cookies are unique identifiers that a web provider uses to track a user's Internet usage. A cookie may be simply an identifier, which may be a number, or text string that may be installed on the user's computer by an ad server, or any other entity with which the user communicates. The ad server documents the cookie identifier as being a particular user. When that user connects to a specific web site, or to the ad server, the cookie is included in the connection request allowing the ad server to count the number of times the user connects to the specific site. The ad server stores the user's usage data identified by the cookie identifier and may conduct further analysis. For example, the user's Internet usage may be analyzed for tendencies that would indicate the user's interests, as well as the user's commercial behavior such as, buying tendencies, products and services of interest, electronic purchasing frequency, or any other characteristic that would be of interest to on-line marketers.

In another example, ad servers may be associated with a search engine, such as for example, Google. The search engine may track a user's search terms (via the cookie for example) and analyze the search terms to obtain some indication of the user's commercial behavior.

Adware has also evolved as a way of targeting advertisement. Adware is a type of software program that generates advertisements on a user's device as the application runs. The advertisements may be displayed as banners, pop-ups, or any other display tool. Adware once embedded in the user's device may tailor the ads displayed to the user based on the user's Internet usage.

Ad servers, adware, AdNetworks and other current techniques for providing advertisement electronically can introduce privacy and security risks to the users. First, the user has little choice or control regarding the display of the ads on the user's device. Current techniques install cookies and other ad tools on user's devices without the user's choice, or even knowledge. Users may agree to using adware in exchange for a lower purchase price on a particular application. However, the user still lacks control over the content and use of their private information. Current techniques may also access and communicate the user's private information and usage information without authorization or even the user's knowledge. The dissemination of usage data alone may create substantial risks. AdNetworks use the user's usage data and have deanonymizing capabilities that can pinpoint a person's identity with high accuracy depending on what personal information is exposed. Current techniques also carry the danger of including spyware or malware or Trojans or any other software that runs on a user's device without the user's knowledge to perform tasks that are harmful or potentially harmful to the user.

Software exists to limit the user's exposure to cookies and other identifying information like IP addresses. However, by limiting exposure to cookies, users and advertisers lose the advantage of exchanging advertisement that is targeted and therefore of relevance to the users.

Another problem with current advertisement techniques for targeting to consumers is the complete lack of control that a user has in contributing to the information used by advertisers to target their ads. The data obtained by advertisers relates to the user's Internet usage. The data is collected and analyzed by the web sites without the benefit of the user's input. Consequently, the user experiences receiving advertisements relating to products and services in which either the user may have little actual interest, or the user would prefer not to receive certain types of ads, or prefer other types of ads.

Concerns over the privacy risks and lack of user control over private information are becoming more ominous as users have increasingly more ways of communicating electronically. User devices include mobile devices, such as cell phones, subscription radio devices, Wi-Fi devices, and other mobile devices that may communicate outside of the World Wide Web (Web), or even the Internet. For example, user's cell phones may receive unwanted text messages. Bluetooth and other protocols are being used to create infrastructure that may use point-to-point connectivity providing advertising entities and entities with malicious intent with further opportunities to invade the users' privacy.

Current on-line advertising schemes currently operate to the benefit of marketers, advertisers, and retailers to the detriment or risk of detriment to the users. There is a need for systems and methods that provide the user with control over the distribution of the user's usage data and private information in a manner that does not detract from, or even enhances, the user's on-line commercial experience by receiving advertisement and other marketing information that is consistent with the user's interests and commercial behavior.

### SUMMARY

In view of the above, systems and methods are provided for tracking a user's usage of resources on networks under the user's control, and for controlling the distribution of the user's usage data. In one example system, a personal data endpoint is configured to operate on a computer that is connected to a public network. The personal data endpoint includes a network data interface configured to receive data communicated to and from a user of at least one personal application. The at least one personal application is configured to send and receive data over the public network. A usage data logger stores usage data from the received data, and stores the usage data in a usage data log. A user data filter is configured to control communication of the usage data over the public network and to inhibit communication of information identifying the user over the public network.

In another example, a system is provided for controlling distribution of usage data stored electronically on a computer configured to connect to the public network. An example system includes at least one personal application configured to perform user transactions. The user transactions include sending requests for data and receiving data over the public network. The system also includes a personal data endpoint operating on the computer configured to connect to the public network. The personal data endpoint receives data communicated to and from a user of the at least one personal application, selects usage data from the received data, and stores the usage data in a usage data log. A user data filter controls communication of the user data over the public network and inhibits communication of information identifying the user over the public network. Based on configurable rule sets, the user data filter is fully configurable by the user.

In another example, a method is provided for controlling the communication of a user's personal information over the public network. An example method includes receiving a request for media from a personal application over a network connection, for example a web browser. The request for media is a request for media content directed to a third-party resource, such as a web site connected to the public network. A record of the request for media is stored in a usage data log corresponding to the user of the personal application. At the same time with the logging of the data, the request for media is then communicated to the third-party resource, such as a web page from the New York Times web site. A response to the request for media is received from the third-party resource. The response includes at least one embedded ad or at least one Ad data request. The Ad Data request will send personal information and a request for an advertisement. If the Ad Data request target is an AdNetwork or another server which is rated as privacy invading, the system will inhibit communication and prevent the personal information from going to the AdNetwork. The user then simply sees the content that they requested. If the Ad Data request target is deemed as not privacy invading or if the user has assented to getting ads from the Ad Data target, then the Ad Data request is allowed through the system to the destination Ad source. At this point the Ad Data is returned to the personal application and presented to the user.

Other systems, methods and features of the invention will be or will become apparent to one with skill in the art upon examination of the following figures and detailed description. It is intended that all such additional systems, methods, and features be included within this description, be within the scope of the invention, and be protected by the accompanying claims.

According to an aspect of the invention, there is provided a personal data endpoint configured to operate on a computer connected to a public data network, the personal data endpoint comprising: a network data interface configured to receive data communicated to and from a user of at least one personal application configured to send and receive data over the public data network; a usage data logger configured to select usage data from the received data, and to store the usage data in a usage data log; and a usage data filter configured to control communication of the usage data over the public data network and to inhibit communication of information designated as private information over the public data network.

The personal data endpoint may comprise: a user profile component configured to generate a personal profile containing a user's personal information including consumer behavior information based on usage data stored in the user's usage data log.

The personal data endpoint may comprise a user profile interface configured to provide the user with access for specifying conditions for permitting access of the data in the personal profile to third-party devices over the network.

The personal data endpoint may comprise: a personal ad service configured to receive advertisement information requests from the user that are generated when the user receives embedded page media in a web page, and to re-configure the advertisement information requests according to the user's personal profile.

The personal data endpoint may comprise: an ad blocker configured to block advertisement information requests from the user that are generated when the user receives embedded page media in a web page.

The personal data endpoint may be configured to operate on a user device that includes personal applications used by the user, the personal applications including functions that communicate over the network

The personal data endpoint may be configured to operate on the user device, the personal data endpoint further comprising: a sync manager configured to manage an exchange of usage data with a second personal data endpoint operating on a second user device.

According to an aspect of the invention, there is provided a system for controlling distribution of usage data stored electronically on a computer configured to connect to a public data network, the system comprising: at least one personal application configured to perform user transactions that include sending requests for data and receiving data over the public data network; a personal data endpoint operating on the computer configured to connect to the public data network, the personal data endpoint configured to receive data communicated to and from a user of the at least one personal application, to select usage data from the received data, and to store the usage data in a usage data log; and a usage data filter configured to control communication of the usage data over the public data network and to inhibit communication of information identifying the user over the public data network.

The system may comprise: a user profile component configured to generate a personal profile containing a user's personal information including consumer behavior information based on usage data stored in the user's usage data log; and a personal ad service configured to receive advertisement information requests from the user that are generated when the user receives embedded page media in a web page, and to re-configure the advertisement information requests according to the user's personal profile.

The personal data endpoint may be configured to operate on a user device that include personal applications used by the user, the personal applications including functions that communicate over the network.

The personal data endpoint may be configured to operate on the user device, which is a first user device, the personal data endpoint further comprising: a sync manager configured to manage an exchange of usage data with a second personal proxy module operating on a second user device, the second personal proxy module configured to connect to the public data network, to receive data communicated to and from the user of at least one mobile personal application, to select usage data from the received data, to store the usage data in a mobile usage data log, and to sync the usage data in the mobile usage data log with the usage data stored on the first user device.

The second personal proxy module may be a second personal data endpoint.

The system may comprise: an anonymizing proxy server configured to receive data communicated to and from the user and to extract identifying information from the communications to and from the user.

The computer configured to connect to the network may be an external server device configured to store and to operate the personal data endpoint, the external server device further configured to provide access connections to the user to permit the user to connect to the network, and the system further comprises: a user device configured to operate the at least one personal application, the user device further including a personal proxy client configured to communicate with the personal data endpoint to control third party access to the user's usage data.

According to an aspect of the invention, there is provided a method for controlling the communication of a user's commercial information over a public data network, the method comprising: receiving a request for media from a personal application over a network connection, the request for media being directed to a third-party resource; storing a record of the request for media in a usage data log corresponding to the user of the personal application; sending the request for media to the third-party resource; receiving a response to the requested media from the third-party resource, the response including at least one embedded ad and at least one request for usage data; extracting the usage data requestors to inhibit communication of the usage data requestors to the personal application; sending the response, including the at least one embedded ad, to the personal application; receiving a request for an ad corresponding to the at least one embedded ad from the personal application; and inhibiting communication of the request for the ad over the network.

The method may comprise: syncing the records in the usage data log with a second usage data log over a second network connection.

The method may comprise: after the step of inhibiting communication of the request for the ad, sending an alternative ad selected according to the user's usage data.

The method may comprise: generating a personal profile containing the user's personal information including consumer behavior information based on usage data stored in the user's usage data log.

The method may comprise: receiving advertisement information requests from the user, the advertisement information requests being generated when the user receives embedded page media in a web page; and re-configuring the advertisement information requests according to the user's personal profile.

The method may comprise: extracting usage data requestors from communications received from third party devices over the network; and inhibiting responses to the usage data requestors.

According to an aspect of the invention, there is provided a system for advertising over a public data network to users connected to network user devices configured to implement a personal application configured to communicate over the public data network with advertising devices, the advertising devices configured to track usage by the users by sending and monitoring usage data requestors installed on the network user devices, the system comprising: a personal data endpoint operating on at least one networked device, the personal data endpoint configured to receive data communicated to and from a user of the personal application on the at least one networked device, to select usage data from the received data, and to store the usage data in a usage data log; and a usage data filter configured to control communication of the usage data over the public data network based on user managed configuration settings, and to inhibit the communication of usage data requestors to and from the at least one networked device.

The system may comprise: a user profile component operating in conjunction with the personal data endpoint, the user profile component configured to generate a personal profile containing personal information for the user of the at least one networked device, the personal profile including consumer behavior information based on usage data stored in the user's usage data log.

The system may comprise: a personal ad service operating in conjunction with the personal data endpoint, the personal ad service configured to receive advertisement information requests from the user that are generated when the user receives embedded page media in a web page, and to re-configure the advertisement information requests according to the user's personal profile.

The system may comprise: an ad blocker operating in conjunction with the personal data endpoint, the ad blocker configured to block advertisement information requests from the user that are generated when the user receives embedded page media in a web page.

The personal data endpoint may be configured to operate on a user's networked device on which the at least one personal application operates for use by the user, the at least one personal application.

The personal data endpoint may comprise: a sync manager configured to manage an exchange of usage data with a mobile personal data endpoint operating on a mobile user device configured to communicate over the public network.

The mobile personal data endpoint on the mobile user device may be configured to receive data communicated to and from the user of at least one mobile personal application, to select usage data from the received data, to store the usage data in a mobile usage data log, and to sync the usage data in the mobile usage data log with the usage data stored on the first user device.

The system may comprise: an anonymizing proxy server configured to receive data communicated to and from the user of the at least one networked user device via the personal data endpoint, and to extract identifying information from the communications to and from the user.

The at least one networked device may be configured to connect to the public network via an external server configured to store and to operate the personal data endpoint.

In an embodiment: the personal data endpoint includes an internal personal data endpoint and an external personal data endpoint, the at least one networked device is configured to connect to the public network via an external server, the internal personal data endpoint is stored and configured to run on the at least one networked user device, and the external personal data endpoint is configured to store and to operate the personal data endpoint.

### BRIEF DESCRIPTION OF THE DRAWINGS

The examples of the invention described below can be better understood with reference to the following figures. The components in the figures are not necessarily to scale, emphasis instead being placed upon illustrating the principles of the invention. In the figures, like reference numerals designate corresponding parts throughout the different views.

FIG. 1A is a block diagram of an example of a system for performing commercial transactions over the Internet.

FIG. 1B is a block diagram of an example of a personal data endpoint used in the system in FIG. 1A.

FIG. 2 is a block diagram of another example of the system shown in FIG. 1A.

FIG. 3 is a block diagram of another example of the system shown in FIG. 1A.

FIG. 4 is a block diagram of another example of the system shown in FIG. 1A.

FIG. 5 is a block diagram of another example of the system shown in FIG. 1A.

FIG. 6A is a cross-functional flow chart illustrating operation of an example of a method for performing anonymous personal usage tracking and synchronization.

FIG. 6B is a flow chart illustrating operation of an example method for controlling communication of a user's usage data.

FIG. 6C is a cross-functional flow chart illustrating operation of a personal data endpoint having ad server functions.

FIG. 7 is a cross-functional flow chart illustrating operation of a method for performing usage tracking and synchronization in a system that includes an anonymizing proxy server.

FIG. 8 is a cross-functional flow chart illustrating operation of a method for performing usage tracking and synchronization in a system that includes an external personal data endpoint.

FIG. 9 is a cross-functional flow chart illustrating operation of a method for performing usage tracking and synchronization in the system shown in FIG. 3 including an external personal data endpoint and anonymizing proxies.

### DETAILED DESCRIPTION

### I. PERSONAL PROFILE SYSTEM

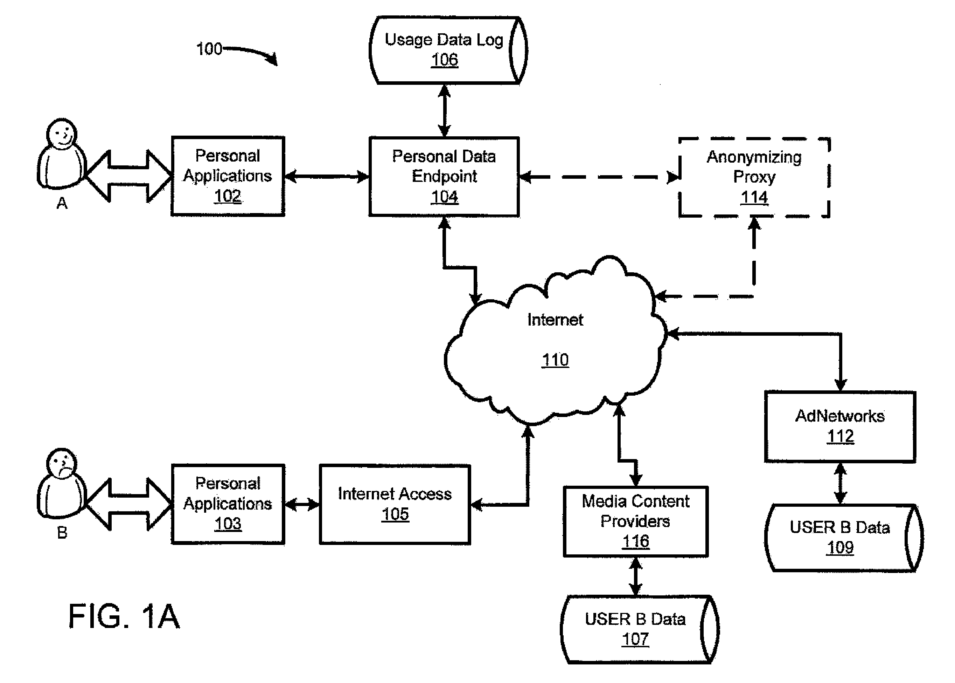

FIG. 1A is a block diagram of a system 100 for performing commercial transactions over the Internet 110. FIG. 1A depicts operation for two users, User A and User B. User A and User B perform commercial transactions using personal applications 102 and 103 connected via a networked device to the Internet 110. The Internet 110 may include any public data network accessible to the user via any suitable network infrastructure or protocol. The public network is "public" in that connectivity is available between any two networked entities capable of communicating on the network. Although any public data network may be used in the examples described below, reference is made to the "Internet" for purposes of illustration.

The commercial transactions available to User A and User B include: shopping, or accessing product and service information such as advertisements and electronic product brochures or catalogs; and purchasing products and services on-line. Advertisement and other product/service information are available to the users on the Internet 110 from media content providers 116 and also from AdNetworks 112. The media content providers 116 may be the actual product/service providers, or web content and media that may contain embedded ad links. The embedded ad links may include embedded ad content, Ad data requests, or links to advertisement media on the AdNetworks 112 or other accessible ad server.

User A may shop on-line by using the personal application 102, which may be, for purposes of illustration, a browser, to connect to the Internet 110 and access media provided by the web content providers 116. User B may shop on-line by using a similar personal application 103. The user (User A or User B) may begin shopping by receiving embedded ad links in the media received from the web content providers 116. The user is provided with information on products/services in the advertisement information received in the media content, and may initiate a process for obtaining additional information or a process that leads to a purchase on-line by selecting one or more links available in the advertisement information.

When a user "visits" a web site, such as a web site of the web content providers 116, the user sends a request for media content. The web content provider 116 responds to the request by sending the media. The response may also include at least one embedded ad link, such as an embedded ad or an Ad Data request. The Ad Data request may be configured to be automatically transmitted by the user's personal application, or the Ad Data request may be communicated by user selection. The Ad Data request may include personal information obtained from the user's device as well as a request for an advertisement. In the example illustrated in FIG. 1A, if the Ad Data request target is an AdNetwork or another server which is rated as privacy invading, the User A's configuration inhibits communication of User A's personal information from going to the AdNetwork. The user then simply sees the content that they requested. If the Ad Data request target is deemed as not privacy invading or if the user has assented to receiving ads from the Ad Data target, then the Ad Data request is allowed through the system to the destination Ad source. At this point the Ad Data is returned to the personal application and presented to User A. User B however lacks the protection available to User A. User B's personal information will be transmitted to the AdNetwork without User B's consent or even knowledge of its transmission.

The media content may also include user identifiers or files, such as "cookies," that web content providers 116 and AdNetworks 112 use to monitor the user's on-line usage. The user identifiers are carried in the media content and install themselves in the hard disk of the user's networked device. Some media content may also include Trojans or malicious software used to access files and programs containing information desired by the web content providers and AdNetwork 112. User identifiers, "cookies," Trojans and other programs used for extracting information from the user are referred to below as "usage data requestors."

The type of information that may be desired when using usage data requestors includes information that helps the media content providers 116 and AdNetworks 112 determine the user's buying habits, product/service interests, and any other information that would allow the web content providers 116 and AdNetwork 112 to target the user for receiving particular advertisement information. Accordingly, the user's usage data may be processed to generate a user profile containing information about the user based on the usage data. This information may include the user's buying habits, product/service interests, demographic information, firmographic information, and any other personal information that the user may prefer to keep private or under the user's control. The information that may be desired by the web content providers 116 and the AdNetworks 112 is referred to below as the user's "usage data" or the user's "profile data."

The example system 100 shown in FIG. 1A includes a personal data endpoint 104, which connects User A's personal application 102 to the Internet 110. The personal data endpoint 104 monitors the connection of the personal application 102 to the Internet 110 receiving all data going to and from User A at the personal applications 102. The personal data endpoint 104 stores records of the sites visited by User A in a usage data log 106. The personal data endpoint 104 protects the user's personal information from being distributed over the Internet 110 in an unauthorized manner. In example implementations, the personal data endpoint 104 may be configured to eliminate communication of all personal information except the IP address of the user's networked device. The IP address may be anonymized using a server pool of proxies such as The Onion Router (TOR).

User B in FIG. 1A connects to the Internet 110 via an internet access 105 without a personal data endpoint 104. The internet access 105 may be a server operating as an Internet Service Provider ("ISP"). Without the personal data endpoint 104, User B is susceptible to adware, cookies and other techniques for obtaining information about User B by unauthorized third-parties. For example, media content providers 116 may manage cookies on User B's user device or receive User B's personal information from Trojans or spyware embedded in User B's user device. The media content providers 116 may store User B's information in a database as User B data 107. Similarly, AdNetworks 112 may manage cookies on User B's user device or receive User B's personal information from Trojans or spyware embedded in User B's user device. The AdNetworks 112 may store User B's information and information derived by performing consumer behavior analysis on the usage data in a database as User B data 109. The media content providers 116 and the AdNetwork 112 may freely sell or distribute User B's information without any authorization from the User B let alone User B's knowledge.

The system 100 in FIG. 1A may also include an anonymizing proxy 114 to connect between the personal data endpoint 104 and the Internet. The anonymizing proxy 114 removes User A's Internet protocol (IP) address from User A's communications messages to prevent its transmission to third parties, such as media content providers 116 and AdNetwork 112. When using the anonymizing proxy 114, User A communicates with the Internet 110 via both the personal data endpoint 104 and the anonymizing proxy 114. The anonymizing proxy 114 may be implemented as a cluster or pool of proxy servers used by User A's networked device to communicate over the Internet 110.

User A and User B may perform commercial transactions using a browser as the personal application 102, 103. The user's personal applications 102, 103 may also include an email client, a text messaging client, financial and accounting applications, spreadsheets, or any other application configured to access data from the Internet. User A's personal data endpoint 104 may connect with a variety of personal applications 102 to obtain a variety of types of data that may be relevant to the user's shopping and buying tendencies. Such data is stored in the usage data log 106.

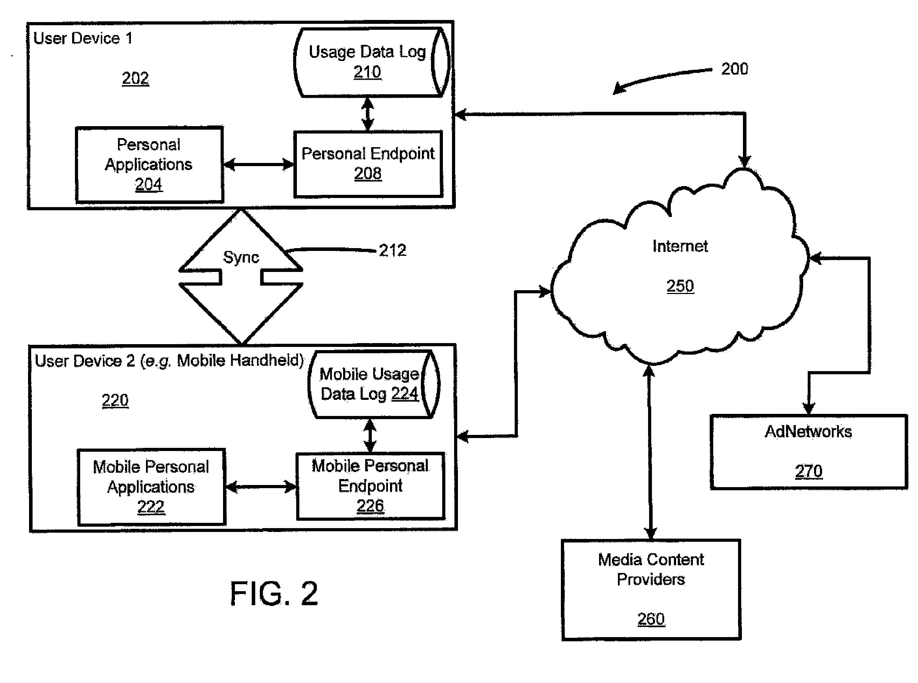

The system 100 in FIG. 1A may be implemented in many different ways. For example, a user may operate a networked device connected directly to the Internet 110 via an Internet Service Provider (ISP). The user's personal data endpoint 104 may operate in the user's networked device as a proxy server. The ISP may also include User A's personal data endpoint 104 as a proxy server or other type of servers that may be referenced when the user connects to the Internet 110. The user's networked device may also connect to the Internet 110 via an enterprise server, or some other server equipped to handle a user's connections to the Internet 110. The personal data endpoint 104 may be installed to operate on the enterprise server, or another connected server targeted for the task. Options for implementing the system 100 are described below in more detail with reference to FIGS. 2-5.

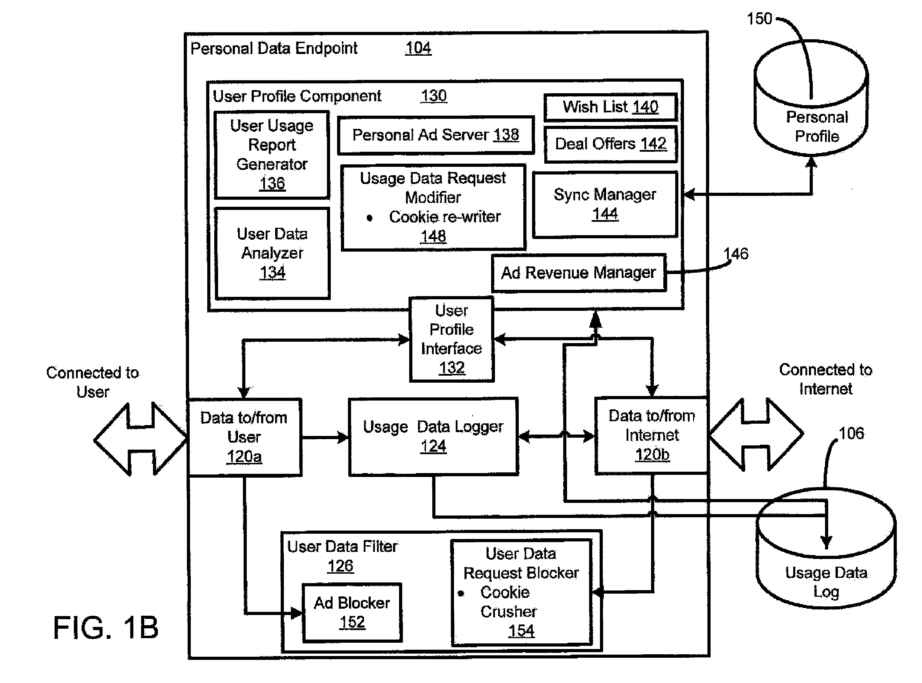

FIG. 1B is a block diagram of a personal data endpoint 104 that may be used in a system 100 shown in FIG. 1A. The personal data endpoint 104 in FIG. 1B includes a first transmitter/receiver ("transceiver") 120a and a second transceiver 120b to transmit and receive data between the user and the Internet. A first transceiver 120a is connected to the user and a second transceiver 120b is connected to the Internet. The first transceiver 120a connects to the user via the user's personal application 102 (in FIG. 1A). It is to be understood by those of ordinary skill in the art that FIG. 1B depicts a logical representation of the transceivers 120a, b as it operates with the personal data endpoint 104. The personal data endpoint 104 may operate on the same computer operating the user's personal applications 102. The personal data endpoint 104 may also operate on another computer connected to a computer used by the user to operate the personal applications 102. Similarly, the personal data endpoint 104 may communicate with the Internet directly or via one or more other computers. The first transceiver 120a shown in FIG. 1B includes the hardware network interface and any I/O hardware and software resources needed to communicate between the user's personal application 102 wherever it may be operating and the personal data endpoint 104 software. The actual hardware and software implementation details may include a variety of solutions known to those of ordinary skill in the art; a more detailed description is therefore omitted for clarity.

The personal data endpoint 104 includes a usage data logger 124, a user data filter 126, and a user profile component 130. The usage data logger 124 is connected to the first and second transceivers 120a, b to receive data from either the user at the first transceiver 120a or from the Internet at the second transceiver 120b. The usage data logger 124 records data relating to content on the Internet accessed by the user. The data is stored as usage data in the usage data log 106. The user data filter 126 is connected to the first transceiver 120a and to the second transceiver 120b to control communication of a user's data and private information over the Internet. The user data filter 126 removes personal information and usage data or requests for advertisements from communications from the user to the Internet 110, and may prevent usage data requestors or personal information from being communicated to the user from the Internet 110.

The user data filter 126 in FIG. 1B includes an ad blocker 152 and a usage data requestor blocker 154. The ad blocker 152 inhibits communication of request for advertisements communicated from the user to the first transceiver 120a when the user has received content containing embedded ad links. The usage data requestor blocker 154 may be used to extract and delete usage data requestors, such as cookies, received from the Internet 110 over connections to web content providers 116 (in FIG. 1A).

The personal data endpoint 104 in FIG. 1B may also include a user profile component 130. The user profile component 130 may be used to configure, manage and maintain a personal profile containing usage data from the usage data log 106 as well as other personal information relating to the user. The personal profile includes data for analyzing a user's buying and shopping tendencies. The user profile component 130 may include tools for analyzing the usage data and managing information determined from the usage data and other information provided by the user.

The user profile component 130 in FIG. 1B includes a user profile interface 132, a user data analyzer 134, a usage report generator 136, a personal ad service 138, a wish list generator 140, a deal offer manager 142, a sync manager 144, an ad revenue manager 146, and a usage data requestor modifier 148. The user profile interface 132 may include a menu driven, or interactive form on a display and, input and output interfaces such as keyboard, buttons, mouse, and display to allow the user to control the menu, or interactive form on the display. The user may configure preferences and designate access control to the user's personal profile information. The user profile interface 132 may also provide access to resources connected to the Internet depending on controls and other settings provided by the user. By providing access to the Internet, the user may control how the user's usage data, usage data and other personal information is communicated to third-party resources, web content providers, and ad servers. The user's personal profile information may be stored in memory shown in FIG. 1B as a personal profile 150. The personal profile information may be stored in encrypted form to further enhance the privacy of the information.

The user data analyzer 134 processes user's usage data or information in the user's personal profile 150, and assesses the user's commercial or consumer behavior. The user data analyzer 134 may include well-known consumer behavior analysis tools used by Google, Yahoo! and other web content providers 116. Results of analysis or reports may be stored in a database, including the user's personal profile 150.

The user usage report generator 13 6 generates usage reports containing information about the user's commercial or consumer behavior. The usage report generator 136 may use results generated by the user data analyzer 134, or provide more raw data, such as the user's usage data. Reports may be generated for display on the user's networked device, for printout, or for communicating over the Internet under conditions governed by the user.

The personal ad service 138 provides requests for advertisement information based on the user's personal profile 150. The personal ad service 138 may be configured to maintain a queue or other type of data storage mechanism containing links to advertisement content that is relevant to the user's interests in products and services as determined from the usage data or information contained in the user's personal profile 150. When the user visits a web page containing media, the media may include embedded ad links. When the user's personal application 102 receives the embedded ad links, the personal application 102 (or another software component having an interface to both the network and the personal application 102) automatically sends requests for the advertisement content over the Internet 110. Adnetworks 112 (in FIG. 1A) receive the requests for advertisement content and respond by sending the advertisement content to the user. The personal ad service 138 substitutes the requests for advertisement content associated with the embedded ad links with the user's requests for advertisement content based on the user's interests.

The wish list generator 140 creates and maintains lists ("wish lists") or shopping lists of products/services of interest to the user. The wish lists may be generated automatically using the user's profile information or usage data. The wish lists may also be created by the user via a user interface to the wish list generator 140 using menus, prompts, or interactive electronic forms. The wish lists may be maintained and published, or selectively communicated, to product providers and marketers on the Internet 110. The wish list generator 140 provides the user with a way of communicating information regarding the types of products and services of interest to the user and enable providers and marketers most likely capable of meeting the user's requests to respond. The wish list generator 140 may include information such as desired pricing, product details (such as size, color, etc. depending on the product), and other information that will allow the user to focus the search.

It is to be noted that the wish list generator 140 does not include personal identifying information in wish lists that are to be published, or otherwise communicated over the Internet 110. The wish list generator 140 may operate in conjunction with an electronic marketplace, or a bulletin board, or some other exchange-like system that would permit anonymous exchanges of information.

The deal offer manager 142 manages receipt and storage of deal offers from marketers and providers that may communicate deals, offers or other relevant information either in response to the user's wish list, or in response to communication of the user's wish list.

The sync manager 144 manages the process of syncing the user's profile and usage data information stored in the personal profile 150 and usage data log 106 with that of another device that the user may use to communicate over the Internet 110. The user may for example use a mobile handheld computer, or smart phone, or other portable computing device, and the portable device may include a mobile personal data endpoint that interfaces with the personal data endpoint 104 over, for example, a Wi-Fi connection. The portable device may include a sync manager, or handler, to permit a coordinated exchange of information permitting the user's network devices to remain up-to-date. Further descriptions of examples of coordinating syncing of data between devices are provided below with reference to FIGS. 2-4.

The ad revenue manager 146 manages revenue that may be generated by requests for advertisement communicated using the personal ad service 138.

The usage data requestor modifier 148 receives usage data requestors from web sites. Before sending them to the user's application 102, the usage data requestor modifier 148 modifies the usage data requestors based on information in the user's personal profile. For example, the usage data requestor modifier 148 may eliminate cookies, Trojans, or any other usage information requesting device from the communications between the user and public network sites to prevent their installation on the user's device.

The personal data endpoint 104 may be implemented as a computer program installed on any personal device. For example, the personal device may be a networked device, such as a network server or a personal computer used as a network station. The personal device may also be a mobile device such as a mobile phone, a laptop, a netbook, or any mobile device capable of communicating over a public network. In one example implementation, the personal data endpoint 104 is implemented as a plug-in, or add-on software component, for a browser, or similar type of personal application 102. The personal data endpoint 104 may include all or some of the functions described above with reference to FIG. 1B within an individual application. The functions may also be performed by other software components operating within the environment of the browser, or whatever personal application 102 being used to access the Internet 110. The personal data endpoint 104 may be implemented as a proxy server for applications that access public networks. The personal data endpoint 104 may also be implemented using a client-server structure in which a server portion operates on a network server device, and one or more client portions operate on one or more user terminals, such as a personal computer (desktop or laptop) and a portable handheld device. Various alternative implementations are described below with reference to FIGS. 2-5.

### II. SYSTEMS AND METHODS FOR CONTROLLING PERSONAL INFORMATION IN E-COMMERCE

FIG. 2 is a block diagram of another example of the system shown in FIG. 1A. The system 200 in FIG. 2 includes a first user device 202, a second user device 220, a plurality of media content providers 260, and a plurality of advertisement servers 270 connected to the Internet 250. The first user device 202 may be a personal computer, such as a desktop, laptop, or other type of user workstation configured to operate as a user's "main" or "primary" access to content on the Internet 250. The second user device 220 may be any computer device as well. In the example shown in FIG. 2, the second user device 220 is a mobile computer, such as a mobile handheld device, a handheld computer (for example, Palm handhelds), a smart phone, a thin laptop ("netbook"), or a cell phone.

The first user device 202 includes at least one personal application 204, a personal data endpoint 208, and a usage data log 210. The at least one personal application 204 includes a browser, an email application, a messaging application (such as a SMS application), or any software application that allows a user to communicate over the Internet 250. The personal data endpoint 208 is a software component that is an example of the personal data endpoint 104 described above with reference to FIGS. 1A and 1B. The personal data endpoint 208 in FIG. 2 may be a plug-in for a browser, an add-on to an email program or messaging program, or a computer program that runs in the background as the user communicates over the Internet 250. The personal data endpoint 208 stores the user's usage data in the usage data log 210.

The second user device 220 includes at least one mobile personal application 222, a mobile personal data endpoint 226, and a mobile usage data log 224. The mobile personal applications 222 may include any application that provides a user with access to the Internet 250. The mobile personal application 222 may be a browser, or mini-browser, configured to run on a mobile device. The mobile personal application 222 may also be an email client, messaging application, or any other similar application. The mobile personal data endpoint 226 may be a relatively thin version of the personal data endpoint 104 shown in FIG. 1B, although the mobile personal data endpoint 226 may be more robust as mobile devices become more powerful. The mobile personal data endpoint 226 may include sufficient functions to record the user's usage data in the mobile usage data log 224 and to sync the information with the usage data log 210 in the first user device 202 at 212. The mobile usage data log 224 may be maintained in data memory that is substantially smaller in capacity than the memory available for the usage data log 210 in the first user device 202. The mobile personal data endpoint 226 may be configured to perform a synchronization of the usage data by uploading all usage data to the personal data endpoint 208. If the second user device 220 has sufficient memory, the mobile personal data endpoint 226 may be configured to perform synchronization by providing that both the second user device 220 and the first user device 202 have a mirrored image of the usage data in the usage data log 210 and the mobile usage data log 226.

The system 200 in FIG. 2 allows a user to perform commercial transactions on a mobile device used as a portable extension of the user's primary computing environment on the first user device 202. All usage data collected on the second user device 220 is made available to the user in a central location by synchronization 212 with the first user device 202. FIG. 2 shows a first and a second user device 202, 220, however, additional user devices may be added as part of the system 200 in FIG. 2.

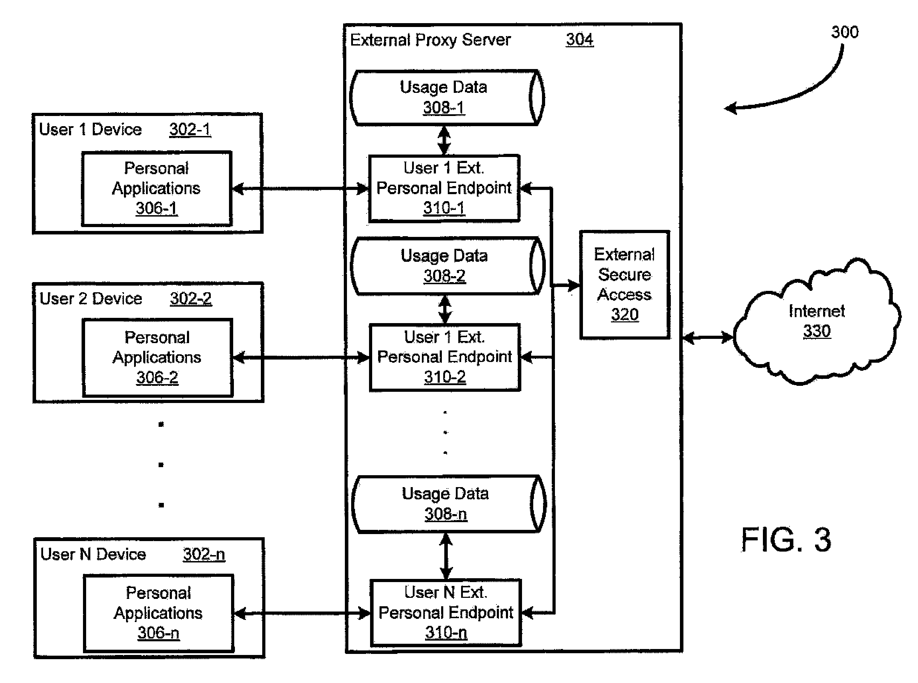

FIG. 3 is a block diagram of another example of the system shown in FIG. 1A. The system 300 in FIG. 3 includes a plurality of user devices 302-1 to 302-n (N user devices as shown in FIG. 3), an external proxy server 304 for providing the users of the user devices 302-1 to 302-n to the Internet 330. The external proxy server 304 includes a first personal data endpoint 310-1 and first usage data log 308-1 corresponding to the first user device 302-1, a second personal data endpoint 310-2 and second usage data log 308-2 corresponding to the second user device 302-2, and an nth personal data endpoint 310-n and an nth usage data log 308-n corresponding to the each of the n user devices 302-n.

The system 300 in FIG. 3 may be an example of an enterprise-implemented system. An enterprise hosts the user's Internet service using the external proxy server 304. The external proxy server 304 hosts the software components that operate as the personal data endpoints 310-1 to 310-n and the usage data logs 308-1 to 308-n. A user may connect to the Internet 330 from a user device 302-1 to 302-n using a personal application 306-1 to 306-n. The user's connection to the Internet 330 is made via the personal data endpoint 310-1 to 310-n. The personal data endpoints 310-1 to 310-n provide usage data recording functions and advertisement content control functions as described above with reference to FIG. 1B. For example, the personal data endpoints 310-1 to 310-n store usage data for the user of the corresponding user device 302-1 to 302-n. Also, for example, the personal data endpoints 310-1 to 310-n may delete or rewrite cookies, or inhibit or re-configure requests for advertisement content corresponding to links in media content received from web sites over the Internet 330. The personal data endpoints 310-1 to 310-n also prohibit usage data, or other personal information from distribution over the Internet 330 in a manner not authorized by the user.

The external proxy server 304 may also include an external secure access function 320, which may provide the users with more secure access to the Internet 330 by providing that the resources to which the users connect do not receive the users' IP addresses.

The external proxy server 304 may be configured to provide the enterprise with control over the user's usage data, or with shared control over the user's usage data. The enterprise may realize advertisement revenue and may choose to share the revenue with the user. For example, the enterprise may sponsor or provide ad server resources that operate in accordance with the user profiles of the users that access the Internet via the external proxy server 304. The external proxy server 304 may be implemented as multiple computers configured as resource servers, such as a server farm or server nodes installed in the network infrastructure of one or more buildings. The external proxy server 304 may be used in the system 300 in FIG. 3 by an Internet service provider. The external proxy server 304 may also be used in the system 300 in FIG. 3 by any enterprise as part of the enterprise's computer network infrastructure.

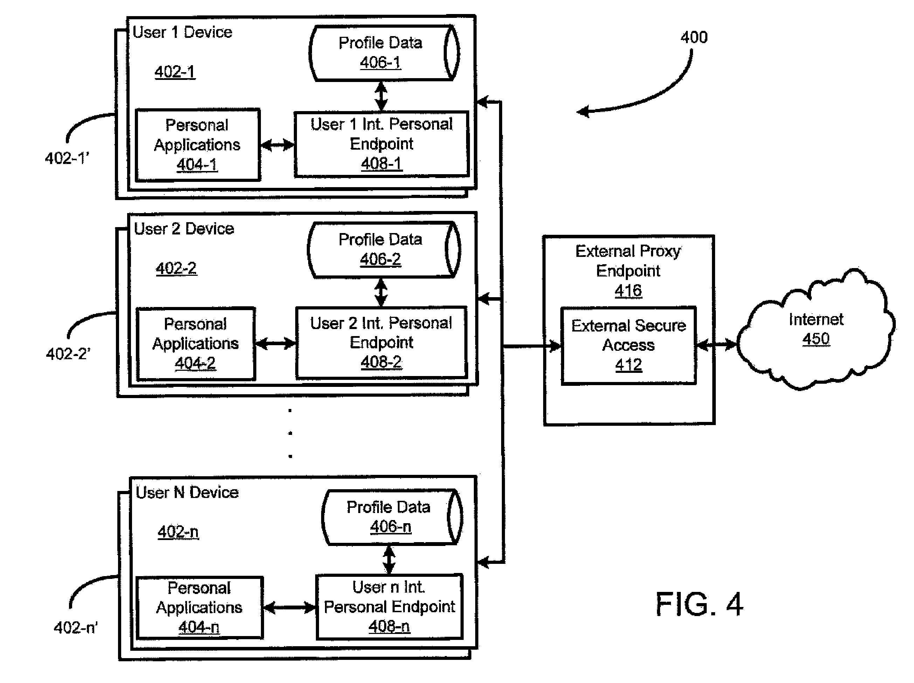

FIG. 4 is a block diagram of another example of the system shown in FIG. 1A. The system 400 includes a plurality of user devices 402-1 to 402-n connected to an external proxy endpoint 416, which provides users with access to the Internet 450. Users access the Internet 450 using the user devices user devices 402-1 to 402-n, each of which includes a personal application 404-1 to 404-n, an internal personal data endpoint 408-1 to 408-n, and a usage data log 406-1 to 406-n. The internal personal data endpoints 408-1 to 408-n are "internal" in that they operate in the user's device 402-1 to 402-n. Users may also access the Internet 450 using a mobile user device 402-1' to 402-n'.

The internal personal data endpoints 408-1 to 408-n in each user device 402-1 to 402-n create a secure connection with the external proxy endpoint 416. The internal personal data endpoints 448-1 to 408-n perform usage data and profile management functions as described with reference to FIG. 1B above. The external proxy endpoint 416 may provide IP address anonymization, firewall tunneling, and other security functions. The external proxy endpoint 416 may include an external secure access 412 to provide a more secure connection by requiring authentication to enable the connection with the user.

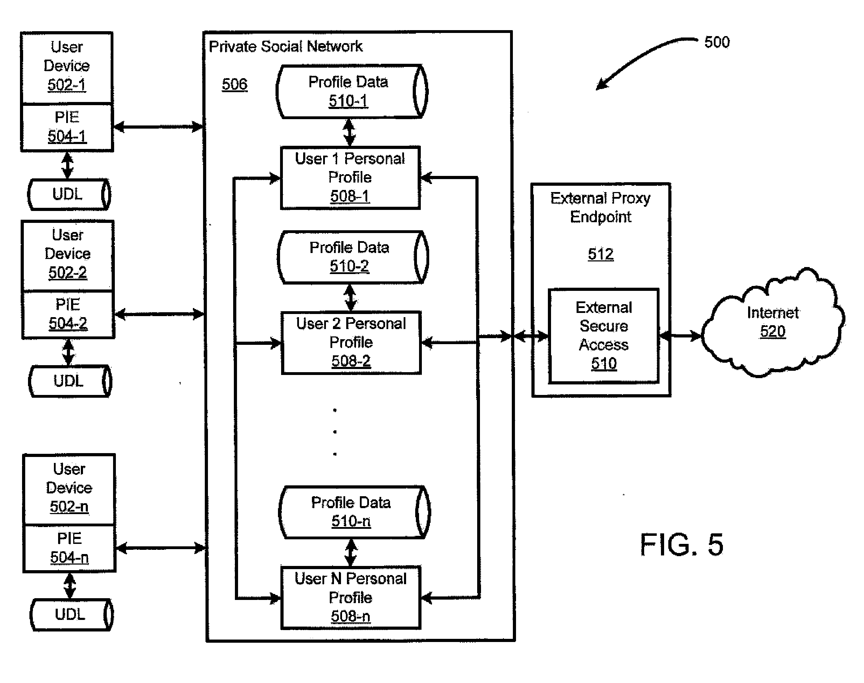

FIG. 5 is a block diagram of another example of the system shown in FIG. 1A. The system 500 in FIG. 5 uses a private social network 506, which is an on-line resource in which users create personal accounts and communicate with other users that access the private social network 506. The private social network 506 may include tools, such as email, messaging, chat tools, and other ways for users to communicate with one another. The private social network 506 may also allow the user to upload information from the user's networked device. The user may upload pictures, video, or other media for posting and/or sharing with other users of the private social network 506. Private social networks 506 may implement secure access procedures, such as requiring entry of a username and password to access one's own account. The user may also control the manner in which other users access personal information. Some examples of private social networks 506 include Facebook, Twitter, LinkedIn, Plaxo, and MySpace.

The system 500 in FIG. 5 may implement personal profiles and personal data endpoints to provide user control over the user's usage data, and to allow the users to communicate the usage data to the users' personal profiles. The private social network 506 may further include tools and resources that use the users' usage data to allow users to selectively communicate their commercial information, focus their shopping, and to allow marketers to target their product offerings.

In the system 500 in FIG. 5, users access the private social network 506 from user devices 502-1 to 502-n. The private social network 506 in FIG. 5 includes a personal profile 508-1 to 508-n for each of the n users having an account on the private social network 506. The user devices 502-1 to 502-n include a personal internal endpoint ("PIE") 504-1 to 504-n connected to a corresponding usage data log ("UDL"). The user devices SD2-1 to 5D2-n may be configured to operate as described above with reference to FIGS. 2, 4 or 5. The user devices 502-1 to 502-n may also be configured without the PIE 504-1 to 504-n or UDL as shown in FIG. 3 and have personal data endpoint service implemented by an external server source. The personal profile 508-1 to 508-n and profile data 510-1 to 510-n may operate as a resource that uses usage data uploaded to the private social network 506 by the users to provide an interface to product/service marketers.

The users may maintain profile data 510 independent of the private social network account, but provide data from the profile 508 and profile data 510 in a controlled manner to the private social network. The user may thereby share comments, reviews, opinions, and other content with fellow private social network members without fear of distribution to potential employers or potential advertisers. The user's account may be configured to implement settings for the user's data security in conjunction with the private social network.

The system 500 in FIG. 5 also includes an external proxy endpoint 512 having an external secure access 510 for further securing connections between the users and the Internet 520 by requiring authentication to enable the connection with the user

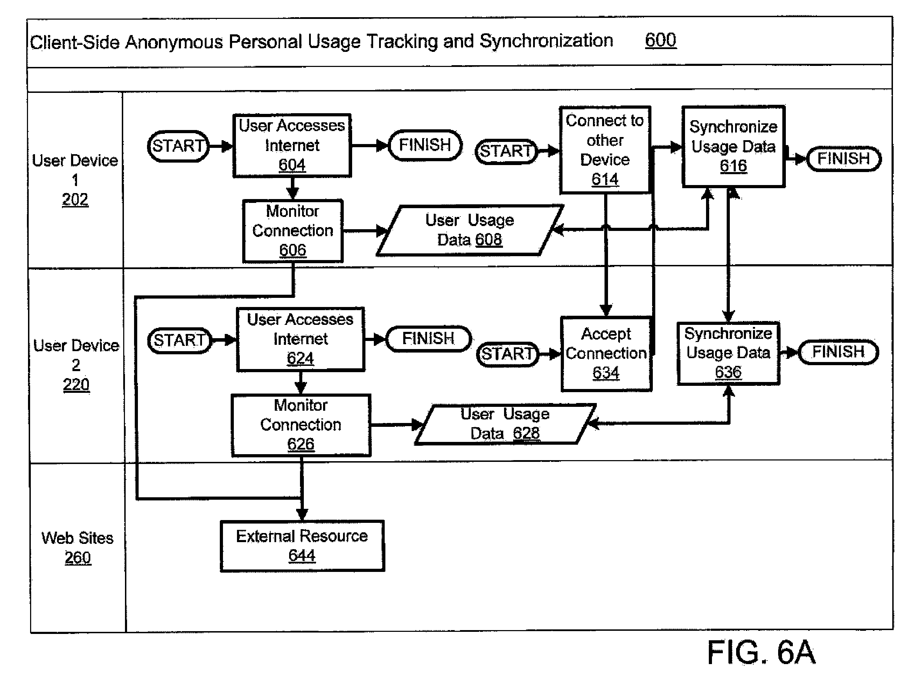

FIG. 6A is a cross-functional flow chart illustrating operation of an example of a method 600 for performing anonymous personal usage tracking and synchronization. FIG. 6A shows functions performed by devices in a system such as, for example, the system 200 shown in FIG. 2. FIG. 6A shows operations performed by the user device 1 202, the user device 2 220, and the web site 260.

The method 600 illustrated in FIG. 6A performs tracking of the usage made by a user of the Internet. The content that the user accesses on the Internet provides information that may be used to determine the user's buying, shopping and other commercial tendencies. The user may maintain this data and use it to selectively distribute the data to marketers and product/service providers based on the user's interests. The data may also be used as described below to enable a user to control or customize the commercial information (such as advertisements) that the user receives over Internet connections.

The tracking ofusage may proceed in the background as the user accesses the Internet. For example, FIG. 6A depicts a user session on the Internet at 604 in which the user accesses the Internet and exchanges data with web sites available on the Internet from the user device 1 202. At step 606, a personal data endpoint on the user device 1 202 monitors the data connection. The personal data endpoint extracts data relating to the web site to which the user requests the connection, and to which a connection is made to the user. For example, data extracted may include the link identifying the web site 260 in FIG. 1B. The personal data endpoint stores the collected data as user usage data 608. The user usage data 608 may be compiled as usage data and used as described in more detail above with reference to FIG. 1B.

The tracking of usage may also proceed in the background when the user is accessing the Internet using another user device, such as the user device 2 220, that may be configured to operate in cooperation with the user device 1 202. For example, a user may use a personal computer as the user's primary access to the Internet. In the example illustrated in FIG. 6A, the user's personal computer, which may be a desktop or a laptop, or any other workstation configured for a user, is the user device 1 202. The user may also use a mobile handheld computer, or smartphone, or netbook, or other mobile computing device for access to the Internet when the user is away from the normal location of the user device 1 202. The mobile device is the user device 2 220 in the example shown in FIG. 6A. The user accesses the Internet at step 624 in a session on the user device 2 220. The user device 2 220 may include a mobile personal data endpoint for extracting the data relating to the web sites accessed by the user in a manner similar to the session that the user conducts from the user device 1 202 at step 604. A mobile personal data endpoint operating on the user device 2 220 extracts user usage data from the connections established by the user on the user device 2 220 at step 626. The user's usage data is stored as usage data at step 628.

The example shown in FIG. 6A illustrates how a single user maintains a usage data log using two user devices. The example also illustrates how the user may synchronize the usage data so that the user is not required to maintain two different usage data logs on two different devices. When the user desires to sync his usage data, the user first connects the user device 1 202 to the user device 2 220 to provide a communication link as shown at step 614. The user device 2 220 accepts the connection at step 634, and in conjunction with the user device 1 202, begins the process of synchronizing the usage data as shown at step 616. The process of syncing data between the two devices may include handshaking signals to control the exchange of data between syncing processes operating in conjunction on both devices as shown at steps 616 and 636. The exchange of data may proceed in both directions so that the result of synchronizing the devices is to achieve a mirror image between the usage data in the two devices. The exchange of data may also proceed in one direction so that one usage data store is being updated with new data from the other usage data store. The user devices 202, 220 may include status data for storing logs of the synchronizations and data about the usage data, such as the time and date on which it was stored. The status data assists in the syncing process by providing information about new data to be synced.

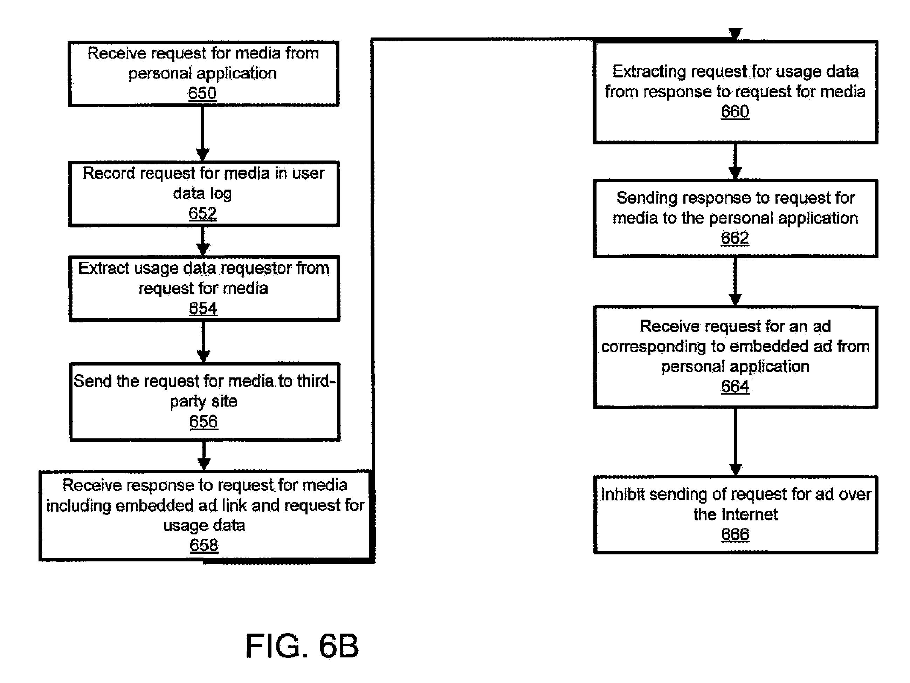

It is noted in FIG. 6A that the usage data and the user's personal information is not communicated to the web site 260 at step 644 when data is exchanged between the user and the web site 260. In addition, the connection created between the user and the web sites 260 created via the personal data endpoint at step 624 disables mechanisms used by third-party web sites to obtain the user's personal information or usage data. FIG. 6B is a flow chart illustrating operation of an example method for controlling communication of a user's usage data. The example method illustrated in FIG. 6B may be implemented as a computer program as part of monitoring the user's connections over the Internet. In the description below with reference to FIG. 6B, the example method is part of the functions performed by the personal data endpoint 208 in FIG. 2. It is to be understood that the personal data endpoint 208 of FIG. 2 is used as an example for purposes of illustrating operation of the method in FIG. 6B, and is not intended to limit operation of the example method in FIG. 6B to any specific implementation.

When a user begins the process of accessing media content on a web site, the user sends a request for the media from the user's personal application 204 (in FIG. 2), which for purposes of illustration is a web browser in this description. With the web browser connected via the network interface of the user device 1 202 to the Internet, the user selects a web site's address (or "URL") for transmission over the Internet in a request for media. The web browser uses requests formatted as "HTTP" requests, which are well known to those of ordinary skill in the art. In the system 200 shown in FIG. 2, the request for media is received by the personal data endpoint 208 at step 650.

The personal data endpoint 652 records the request for media, or data related to the request for media, in the user's usage log, or usage data log, at step 652. The data recorded may include, without limitation, any of:
1. Target web site's address, which may be, for example, the site's URL, IP address if known, or any other identifier
2. Time of transmission
3. Date of transmission
4. Frequently used search terms
5. Usage data requestor, if contained in the request for media, for example, a cookie, which may include the following information:
   - User identifier-previously assigned to the user by the web site
   - Web site address, or URL
   - User preferences for web site
   - Account access information, e.g. user name and password

If the request for media includes a usage data requestor, the personal data endpoint 652 may remove it from the request for media. The usage data requestor may also be modified, or the usage data requestor may be permitted to remain part of the request for media under certain conditions. For example, if the usage data requestor is a copy of usage data requestors that have been previously stored in the usage data log, it may be permitted to remain in the request for media.

The request for media is transmitted over the Internet to the target web site at step 656. The web site responds to the request for media by sending the media content over the Internet. The media content is received by the personal data endpoint at step 658. The media content may include embedded ad links as well as usage data requestors. Usage data requestors may be included when the web site determines that the user is accessing the web site for the first time.

If the media content contains usage data requestors, the personal data endpoint may remove the usage data requestors from the media content at step 660. The usage data requestors may be discarded by performing a process known as "cookie crushing" when the usage data requestor is a "cookie." The usage data requestors may also be modified before sending the media content to the browser. The response to the request for media is then communicated to the browser at step 662. The browser may then send a request for an advertisement based on the embedded ad link in the media content to be communicated over the Internet. The request for an advertisement is received at the personal data endpoint at step 664. The communication of the request for advertisement is stopped at step 666.

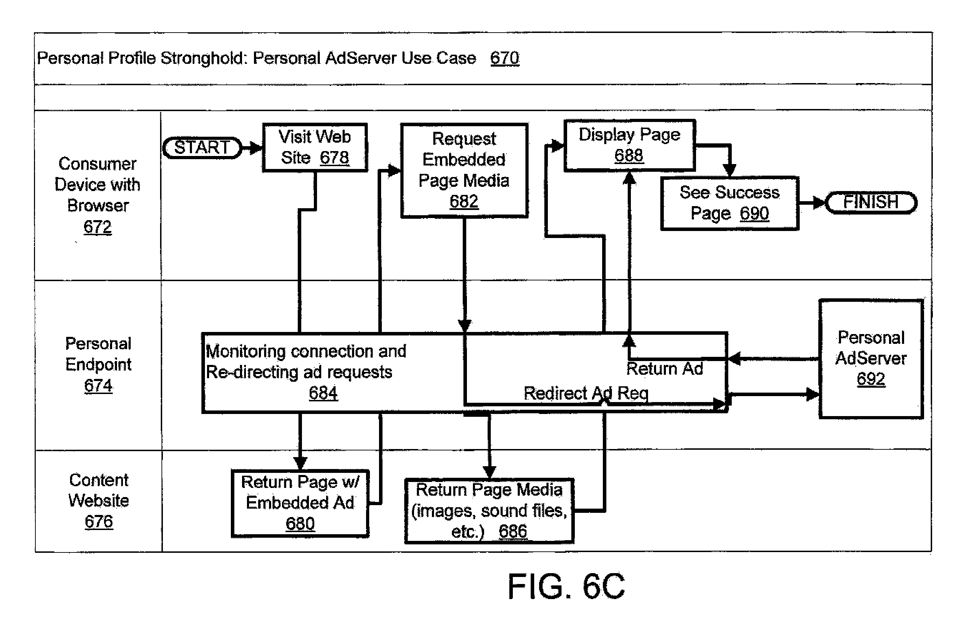

In an example implementation, the requests for advertisement may be reconfigured. For example, requests for advertisement content may be re-directed to advertisement sources that provide advertisement content that is consistent with the user's interests. FIG. 6C is a cross-functional flow chart illustrating operation of an example of a method 670 in which the personal data endpoint 202 (described above with reference to FIG. 2) performs ad server functions. In the example in FIG. 6C, the user may access a web site at step 678 to initiate a web browsing session with the web site, for example. The connection to the web site 260 (FIG. 2) is initiated via the personal data endpoint at step 684, which monitors the connection. The personal data endpoint 202 communicates the request to connect to the web site on the web site 260. The web site returns a web page, which may include an embedded ad link at step 680, to the user device 202. The response to the request for media is communicated via the personal data endpoint 202. At step 682, the user device 202 process the web page, which may include displaying portions of the media on the user's display device.

The user device 202 also sends a request for the ad media related to the embedded ad link in the media content received from the web page. The personal data endpoint 202 receives the request for the ad media and redirects the request to a personal ad service 138 (FIG. 1B). The personal ad service modifies the request for ad media at step 692 by, for example, replacing the request for ad media with a request for ad media related to the user's interests. The personal ad service 138 may include preferences and properties of the original request for ad media. For example, the request for ad media may include size and position details for displaying the ad on the user's display. The reconfigured request for ad media includes a different target corresponding to a web site matching the user's interests. The personal ad service 138 may also replace the request for ad media with a replacement advertisement at step 692.

The personal ad service 138 response provides a revised ad, which is displayed on the user device 202 at step 688. The user may then access the advertisement on the page at step 690.

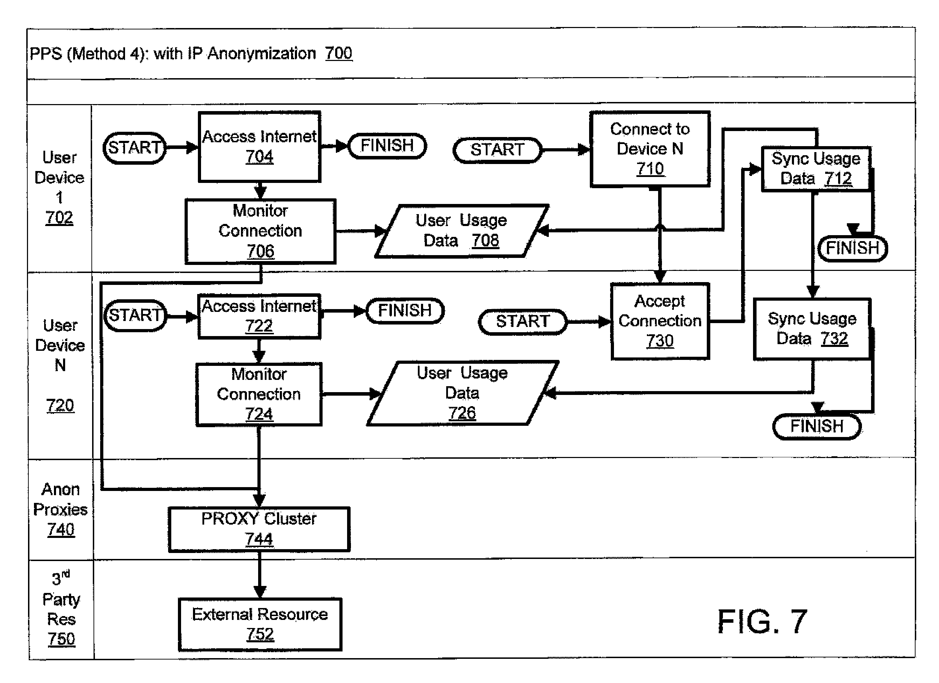

FIG. 7 is a cross-functional flow chart illustrating operation of a method 700 for performing usage tracking and synchronization in a system that includes an anonymizing proxy server. In the example method 700 in FIG. 7, the user accesses the Internet at step 704 to initiate a session with a web site 116 (in FIG. 1A). The connection is initiated and monitored via the personal data endpoint at step 706, which includes storing usage data at step 708. The connection initiation also includes the anonymizing proxy 114, which configures itself as an endpoint in a connection to the web site 116 at step 744. All connections that the user makes to providers on the Internet are made via the anonymizing proxy 114 and the personal data endpoint on the user device 202. The anonymizing proxy 114 anonymizes the connection by substituting the user's IP address in the connection request with a different IP address. During the session, the data is communicated between the web server 260 and the anonymizing proxy 114, and the anonymizing proxy 114 completes the connection to the user. The web server 260 communicates with the user via the anonymizing proxy 114 without having any information about the user or user device. The user participates in the session anonymously.

The example method shown in FIG. 7 includes steps in which the user initiates a session with the web servers 116 using the user device 2 220 at step 722 and 724. The session may be connected anonymously via the anonymizing connection at step 744. FIG. 7 also shows how the user usage data on the user device 1 202 may be synced with the user device 2 220 at steps 710, 712, 730, and 732.

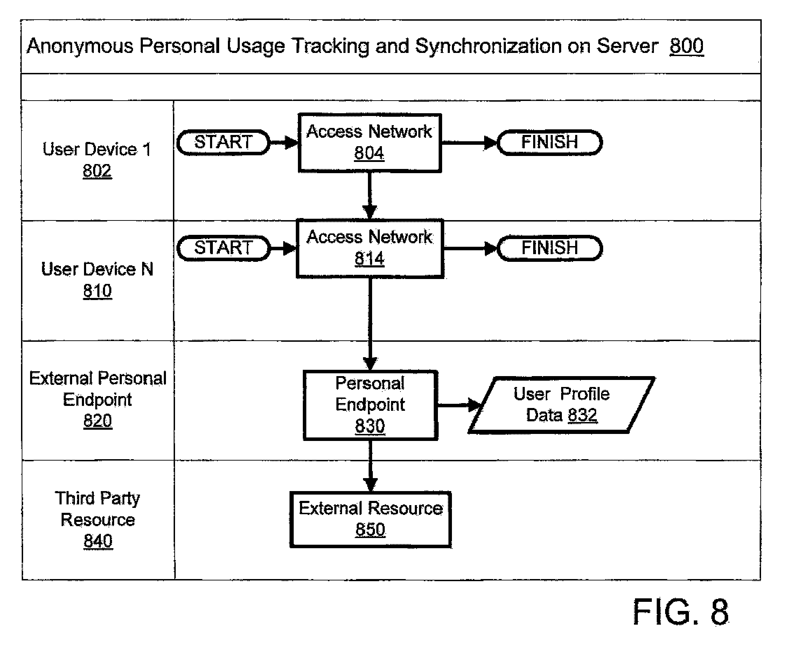

FIG. 8 is a cross-functional flow chart illustrating operation of a method 800 for performing usage tracking and synchronization using an external personal data endpoint 304 (FIG. 3). The description of the cross-functional flow chart in FIG. 8 that follows refers to the system 300 in FIG. 3.

In FIG. 3, the user devices 302-1 to 302-n are configured to access the Internet via the external proxy server 304. The external proxy server 304 includes a personal data endpoint 310-1 to 310-n and usage data log 308-1 to 308-n for each user device 302-1 to 302-n configured to access the Internet via the external proxy server 304.

Referring back to FIG. 8, to illustrate an example, the user, user 1, initiates a session on the Internet at step 804 using the user 1 device 302-1. The communication over the Internet is made via the personal data endpoint 310-1 corresponding to the user that is operating on the external proxy server 304 as shown in step 830. The personal data endpoint 314-1 tracks the user's usage of Internet services by storing information regarding the sites visited by the user in the user profile data 832. The personal data endpoint 310-1 also completes the connection to the external resources on web sites 260 at step 850.

FIG. 8 also shows the user 1 accessing the Internet using a second user device, mobile user 1 device 302-1', which may be a portable computing device that operates as a mobile extension of the user's primary computing environment in the user 1 device 302-1. The user accesses the Internet at step 814 using the mobile user 1 device 342-1'. The user's connection to the Internet is made via the same personal data endpoint 314-1 on the external personal data endpoint 304 that is used for connecting the user's user 1 device 302-1. The usage data log is collected at step 832 for all of the user's connections to the Internet for either of the devices used by the user to connect to the Internet.

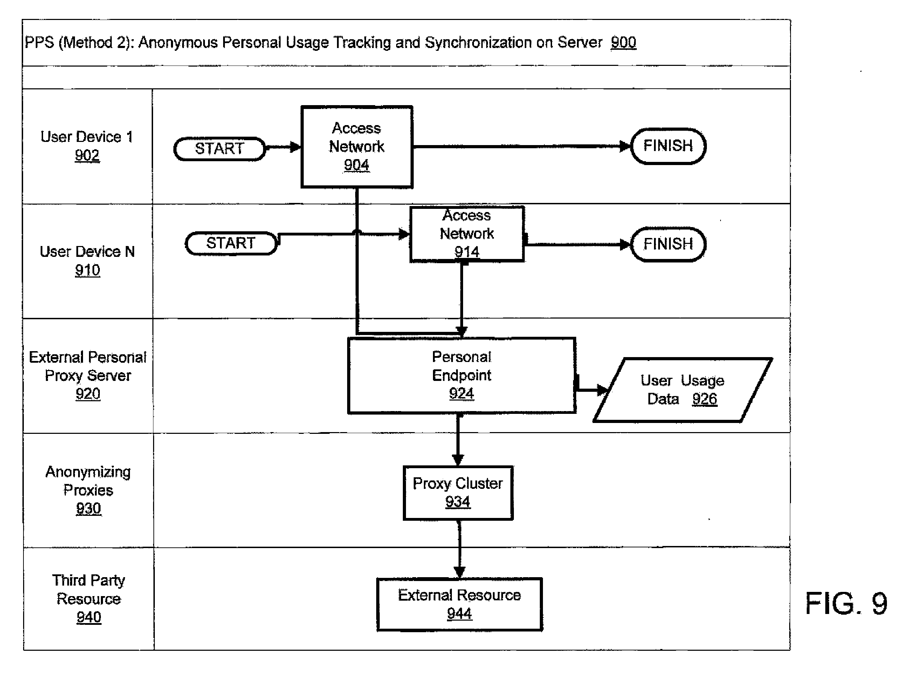

FIG. 9 is a cross-functional flow chart illustrating operation of a method 900 for performing usage tracking and synchronization in the system shown in FIG. 3 including an external personal data endpoint 304 and anonymizing proxies 114 (in FIG. 1A). The method 900 in FIG. 9 includes the steps of initiating sessions on the Internet using either the user 1 device 302-1 or the mobile user 1 device 302-1' at steps 904 and 914, respectively. The connections are made via the personal data endpoint on the external proxy server 304 at step 924. The connections also include anonymizing proxies 114 at step 934.

As described above with reference to FIG. 7, the anonymizing proxies 114 inhibit communication of the user's IP address over the Internet. In communicating messages with a web site, the anonymizing proxy removes the user's IP address from the messages going to and from the user. The web sites communicate with the user, however, only "see" the anonymizing proxies 114.

### III. ALTERNATIVE NETWORKS

It is noted that the description of example implementations above used the Internet as an example of a public network in which the example implementations operate. It is to be understood by those of ordinary skill in the art that implementations within the scope as defined by the claims below are not limited to use of the Internet, or of the Web. Any public or private network over which enterprises advertise their products and services now known or later developed may be used in other example implementations. Public and private networks based on a variety of infrastructures may be used, such as Bluetooth, GPRS, wireless phone networks, satellite communications networks, broadcast radio networks, broadcast television networks, cable networks, power grid communications networks, and any other network over with communications connections may be established whether by wired connections or by wireless connections.

The foregoing description of an implementation has been presented for purposes of illustration and description. It is not exhaustive and does not limit the claimed inventions to the precise form disclosed. Modifications and variations are possible in light of the above description or may be acquired from practicing the invention. Note also that the implementation may vary between systems. The claims and their equivalents define the scope of the invention.

## Claims

1. A method for controlling the communication of a user's commercial information over a public data network, the method comprising:
receiving a request for media from a personal application over a network connection, the request for media being directed to a third-party resource;
storing a record of the request for media in a usage data log corresponding to the user of the personal application;
sending the request for media to the third-party resource;
receiving a response to the requested media from the third-party resource, the response including at least one embedded ad and at least one request for usage data;
extracting the usage data requestors to inhibit communication of the usage data requestors to the personal application;
sending the response, including the at least one embedded ad, to the personal application;
receiving a request for an ad corresponding to the at least one embedded ad from the personal application; and
inhibiting communication of the request for the ad over the network.

2. The method of claim 1 further comprising:
syncing the records in the usage data log with a second usage data log over a second network connection.

3. The method of claim 1 further comprising:
after the step of inhibiting communication of the request for the ad, sending an alternative ad selected according to the user's usage data.

4. The method of claim 1 further comprising:
generating a personal profile containing the user's personal information including consumer behavior information based on usage data stored in the user's usage data log.

5. The method of claim 3 further comprising:
receiving advertisement information requests from the user, the advertisement information requests being generated when the user receives embedded page media in a web page; and
re-configuring the advertisement information requests according to the user's personal profile.

6. The method of claim 1 further comprising:
extracting usage data requestors from communications received from third party devices over the network; and
inhibiting responses to the usage data requestors.

7. A system for advertising over a public data network to users connected to network user devices configured to implement a personal application configured to communicate over the public data network with advertising devices, the advertising devices configured to track usage by the users by sending and monitoring usage data requestors installed on the network user devices, the system comprising:
a personal data endpoint operating on at least one networked device, the personal data endpoint configured to receive data communicated to and from a user of the personal application on the at least one networked device, to select usage data from the received data, and to store the usage data in a usage data log; and
a usage data filter configured to control communication of the usage data over the public data network based on user managed configuration settings, and to inhibit the communication of usage data requestors to and from the at least one networked device.

8. The system of claim 7 further comprising:
a user profile component operating in conjunction with the personal data endpoint, the user profile component configured to generate a personal profile containing personal information for the user of the at least one networked device, the personal profile including consumer behavior information based on usage data stored in the user's usage data log.

9. The system of claim 7 further comprising:
a personal ad service operating in conjunction with the personal data endpoint, the personal ad service configured to receive advertisement information requests from the user that are generated when the user receives embedded page media in a web page, and to re-configure the advertisement information requests according to the user's personal profile.

10. The system of claim 7 further comprising:
an ad blocker operating in conjunction with the personal data endpoint, the ad blocker configured to block advertisement information requests from the user that are generated when the user receives embedded page media in a web page.

11. The system of claim 7 where the personal data endpoint is configured to operate on a user's networked device on which the at least one personal application operates for use by the user, the at least one personal application.

12. The system of claim 11 the personal data endpoint further comprising:
a sync manager configured to manage an exchange of usage data with a mobile personal data endpoint operating on a mobile user device configured to communicate over the public network.

13. The system of claim 12 where the mobile personal data endpoint on the mobile user device is configured to receive data communicated to and from the user of at least one mobile personal application, to select usage data from the received data, to store the usage data in a mobile usage data log, and to sync the usage data in the mobile usage data log with the usage data stored on the first user device.

14. The system of claim 7 further comprising:
an anonymizing proxy server configured to receive data communicated to and from the user of the at least one networked user device via the personal data endpoint, and to extract identifying information from the communications to and from the user.

15. The system of claim 7 where the at least one networked device is configured to connect to the public network via an external server configured to store and to operate the personal data endpoint.

16. The system of claim 7 where:
the personal data endpoint includes an internal personal data endpoint and an external personal data endpoint,
the at least one networked device is configured to connect to the public network via an external server,
the internal personal data endpoint is stored and configured to run on the at least one networked user device, and
the external personal data endpoint is configured to store and to operate the personal data endpoint.
